(19) Europäisches Patentamt
European Patent Office
Office européen des brevets

(11) **EP 4 414 650 B1**

(12) **EUROPEAN PATENT SPECIFICATION**

(45) Date of publication and mention
of the grant of the patent:
**30.07.2025 Bulletin 2025/31**

(21) Application number: **23168624.7**

(22) Date of filing: **19.04.2023**

(51) International Patent Classification (IPC):
*F28D 15/00* (2006.01)    *H01M 10/6556* (2014.01)
*F28D 15/02* (2006.01)    *F28D 21/00* (2006.01)
*F25D 17/00* (2006.01)    *F24D 5/06* (2006.01)
*F24D 3/12* (2006.01)    *F24F 1/00* (2019.01)
*F28D 1/053* (2006.01)    *F24D 3/14* (2006.01)
*F24D 3/18* (2006.01)    *F24D 19/10* (2006.01)
*F24F 5/00* (2006.01)

(52) Cooperative Patent Classification (CPC):
**F28D 15/0266; F24D 3/14; F24D 3/146; F24D 3/18;
F24D 19/1039; F28D 1/05316; F28D 15/00;
H01M 10/6556;** F24F 1/0059; F24F 5/0089;
F28D 2021/0035; F28D 2021/0043; F28F 2255/02

(54) **HEAT EXCHANGE SYSTEM WITH FLEXIBLE HEAT EXCHANGER**

WÄRMETAUSCHERSYSTEM MIT FLEXIBLEM WÄRMETAUSCHER

SYSTÈME D'ÉCHANGE DE CHALEUR AVEC ÉCHANGEUR DE CHALEUR FLEXIBLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.02.2023 CN 202320197050 U
06.03.2023 CN 202320396468 U
06.03.2023 CN 202320396430 U
10.03.2023 CN 202320448672 U
23.03.2023 CN 202320636465 U**

(43) Date of publication of application:
**14.08.2024 Bulletin 2024/33**

(73) Proprietor: **Zhejiang Yifei Technology Co., Ltd
Hangzhou Zhejiang (CN)**

(72) Inventors:
• **Han, Binbin**
**Hangzhou (CN)**
• **Zhao, Yunpeng**
**Hangzhou (CN)**
• **Mao, Xinbo**
**Hangzhou (CN)**

(74) Representative: **Huang, Liwei
Cäcilienstraße 12
40597 Düsseldorf (DE)**

(56) References cited:
**US-A1- 2009 025 921**    **US-A1- 2012 037 339**
**US-B2- 11 047 266**    **US-B2- 11 118 840**

# Description

## TECHNICAL FIELD

The present application relates to a heat exchange system, in particular to a heat exchange system with a flexible heat exchanger.

## BACKGROUND

In addition to heat exchanger plate, floor heating is also a common heating mode. Common floor heating includes electric floor heating, water floor heating and air-source heat floor heating. The three types of floor heating are to exchange heat to the concrete layer, then transfer heat to the floor or tile above and finally radiate heat indoor so as to rise the temperature of the indoor air. Since the concrete layer has a larger thickness (usually 2 to 3 cm), it is inevitable to lead to low heat transfer efficiency and slow indoor temperature rise. The air-source heat floor heating generally adopts an air energy heat exchange mode, with the highest heat conversion efficiency and the lowest use cost. In the air-source heat floor heating, heat exchangers made of metal pipes with a large pipe diameter (generally greater than 4 mm) and a limited heat radiating area are generally adopted, and the heat exchangers are high in stiffness and inconvenient for packaging, transportation and installation.

On the other hand, the conventional battery group heat radiator is generally filled in the gap between batteries, and the heat is transferred through the contact portion of the heat radiator with the batteries, so that the heat radiated by the batteries is exchanged out. The disadvantage of this technology is that the heat radiator is high in stiffness and cannot be closely attached to the batteries, so that the heat exchange efficiency is reduced.

Therefore, there is a need in the prior art for a heat exchanger that is convenient for packaging, transportation and installation and high in heat radiation efficiency.

US 20090025921A1 provides a capillary tube mate 26 comprising a support structure 32 which is particularly of a flexible type and which has mutually parallel capillary tubes 34.

## SUMMARY

The present application provides a heat exchange system with a flexible heat exchanger, which is convenient for packaging, transportation and installation and high in heat radiation efficiency.

The invention is set out in the appended set of claims.

The present application relates to a heat exchange system with a flexible heat exchanger, wherein the flexible heat exchanger includes a flexible substrate and a plurality of pipes; the plurality of pipes are arranged on the flexible substrate in parallel; two ends of the pipes are connected to an inlet header and an outlet header, respectively; the heat exchange system further includes an outdoor heat exchanger unit; and, the outdoor heat exchanger unit is connected to the inlet header and the outlet header, respectively, to form a circulating heat exchange system; wherein protection strips are arranged at edge positions of the flexible heat exchanger.

Wherein, the flexible heat exchanger is arranged above a floor; the inlet header and the outlet header are arranged on the bottom of a wall; a bent portion is formed at the end of the flexible heat exchanger; protective jackets are arranged outside the inlet header and the outlet header; protection strips are arranged at edge positions of the flexible heat exchanger, and the protection strips are fixed on the floor through fasteners or the protection strips are adhered on the floor; a heat insulating layer is arranged between the flexible heat exchanger and the floor, and a decorative layer is arranged above the flexible heat exchanger; the flexible heat exchange is arranged on the wall, and a heat insulating layer is arranged between the flexible heat exchanger and the wall; and, the flexible heat exchanger includes multiple groups of pipes arranged at intervals, and holes are formed on the flexible substrate between the multiple groups of pipes.

The present application further relates to a refrigerating system utilizing natural convection, including an indoor heat exchanger unit, an outdoor heat exchanger unit and a pipe connecting the indoor heat exchanger unit and the outdoor heat exchanger unit, wherein the indoor heat exchanger unit includes a flexible heat exchanger; the flexible heat exchanger is arranged on a ceiling or wall of a building; the flexible heat exchanger includes a plurality of parallel heat exchange pipes and a flexible substrate; an inlet header and an outlet header are provided at two ends of the plurality of parallel heat exchange pipes, respectively; and, the heat exchange pipes are arranged on the flexible substrate.

The indoor heat exchanger unit further includes a condensed water receiving device; the condensed water receiving device includes a bracket and a fan, the flexible heat exchanger is arranged on the bracket, the bracket is mounted on the building, and the fan is mounted on the bracket; a decorative layer is further arranged on the surface of the flexible heat exchanger, the flexible heat exchanger and the decorative layer are integrated with the ceiling or wall of the building. Or, the condensed water receiving device includes a bracket and a fan, the bracket is mounted on the building, and the fan is mounted on the bracket. A plurality of through holes are formed on the flexible substrate, the through holes run through the flexible substrate, and the through holes have a diameter of 1 to 2 mm or less than 1 mm; and, the outdoor heat exchanger unit includes an outdoor heat exchanger and a throttle valve, and the throttle valve is arranged between the outdoor heat exchanger and the flexible heat exchanger.

The present application further relates to a heat exchange system, including a refrigerating system and a floor heat exchanger, wherein the refrigerating system is the refrigerating system described above, and the floor heat exchanger and the indoor heat exchanger unit are connected in parallel to the outdoor heat exchanger unit.

The heat exchange system further includes a valve component; the heat exchange system of the indoor heat exchanger unit is connected to the heat exchange system of the outdoor heat exchanger unit through the valve component; the floor heat exchanger is connected to the heat exchange system of the outdoor heat exchanger unit through the valve component; the heat exchange system of the indoor heat exchanger unit and the floor heat exchanger are connected in parallel to the heat exchange system of the outdoor heat exchanger unit; and, refrigerant inlet and outlet pipes of the valve component are connected to the heat exchanger of the indoor heat exchanger unit, the floor heat exchanger and the compressor and outdoor heat exchanger in the outdoor heat exchanger unit, respectively. In a refrigerating cycle, the valve component switches off the connection between the heat exchange system of the outdoor heat exchanger unit and the floor heat exchanger; and, in a heating cycle, the valve component switches off the connection between the heat exchange system of the outdoor heat exchanger unit and the heat exchange system of the indoor heat exchanger unit.

The flexible heat exchanger of the present application may also be applied in a battery component, the battery component includes at least one battery group arranged in parallel, the battery group includes at least one battery, and the flexible heat exchanger is arranged outside the battery group. A heat conducting glue may be arranged between the flexible heat exchanger and the outside of the battery group, or the flexible heat exchanger may be directly arranged outside the battery group, or the flexible heat exchanger may be arranged on an inner wall of a battery box of the battery component. The battery component may include more than two battery groups, the flexible heat exchanger may be arranged on the battery groups continuously or at intervals, and each of the battery groups includes one or more rows of batteries.

The heat exchange system with a flexible heat exchanger according to the present application has the following technical effects.

(1) The flexible heat exchanger of the present application adopts a flexible substrate, and the pipes have a diameter of less than 4 mm, so that the heat exchanger is better in overall flexibility, convenient for folding, transportation and installation, and larger in heat exchange area. Moreover, the flexible substrate is easy to attach to the contact surface and difficult to form an empty drum, so that the heat exchange efficiency is improved.

(2) The flexible heat exchanger of the present application can be directly arranged on the floor or the wall without being buried in the concrete layer, thus avoiding the defects of high heat resistance and low heat transfer efficiency caused by the thick concrete layer. In addition, the flexible heat exchanger may also be placed on the wall in a grid cloth manner. By connecting the flexible heat exchanger to an external heat exchanger unit, the indoor circulating heat exchange is realized, and the strength of the structure can be enhanced, thereby achieving double effects.

(3) The flexible heat exchanger of the present application may be closely adhered to the surface of the battery, so that the heat exchange efficiency of the battery can be improved, the heat can be radiated out rapidly, and the service life and service safety of the battery are improved.

## BRIEF DESCRIPTION OF THE DRAWINGS

FIG. 1 is a partially schematic diagram of a flexible heat exchanger;
FIG. 2 is a schematic diagram of a flexible heat exchanger;
FIG. 3 is a schematic diagram of applying the flexible heat exchanger in a floor heat exchange system;
FIG. 4 is a schematic diagram when the flexible heat exchanger is arranged on a wall;
FIG. 5 is a schematic diagram when multiple groups of pipes are arranged on the flexible substrate at intervals;
FIG. 6 is a schematic structure diagram of another flexible heat exchanger;
FIG. 7 is a schematic diagram of a refrigerating system;
FIG. 8 is a schematic diagram of a first embodiment of the condensation system of the indoor heat exchanger;
FIG. 9 is a schematic diagram of a second embodiment of the condensation system of the indoor heat exchanger;
FIG. 10 is a schematic diagram of coordination of the refrigerating system with the floor heat exchanger;
FIG. 11 is a schematic diagram of a linkage control system of floor heating and air conditioning;
FIG. 12 is a schematic diagram of the system circulation of air conditioning during the refrigerating process;
FIG. 13 is a schematic diagram of the system circulation of air conditioning during the heating process;
FIG. 14 is a schematic planar view of the flexible floor heat exchanger;
FIG. 15 is a schematic side view of the flexible floor heat exchanger;
FIG. 16 is a schematic assembly diagram of the header end of the flexible floor heat exchanger;
FIG. 17 is a schematic assembly diagram of the side edge portion of the flexible floor heat exchanger;
FIG. 18 is a schematic diagram of a battery group with a flexible heat exchanger according to the present application; and
FIG. 19 is a schematic diagram of a battery component with a flexible heat exchanger according to the present application.

## DETAILED DESCRIPTION

In order to make the objectives, technical solutions and advantages of the present application clearer, the embodiments of the present application will be described below in detail with reference to the accompanying drawings. It is to be noted that the embodiments in the present application and the features in the embodiments can be arbitrarily combined with each other if not conflicted.

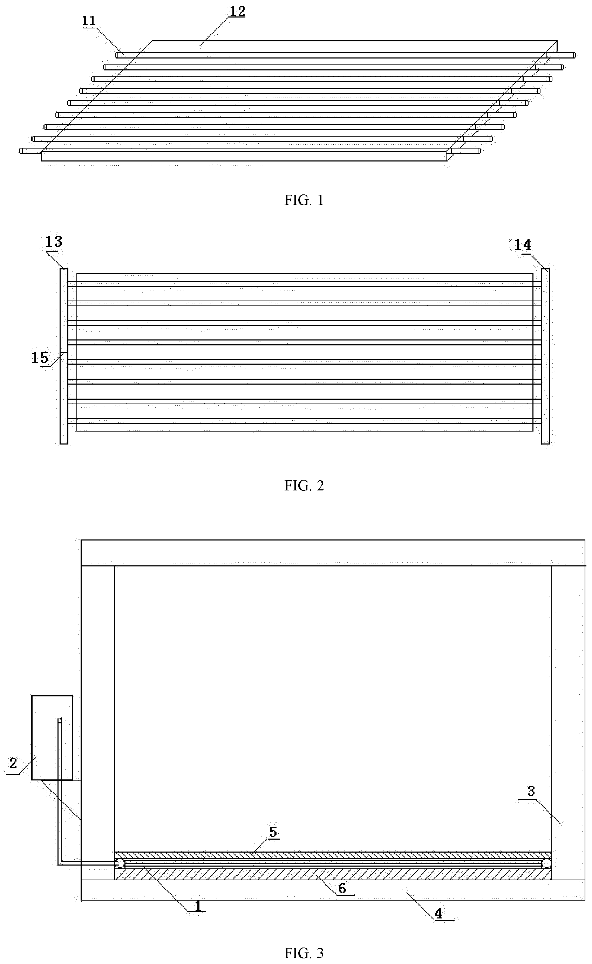

As shown in FIGS. 1-2, a flexible heat exchanger is shown, including a flexible substrate 12 and a plurality of pipes 11. The plurality of pipes 11 are arranged on the flexible substrate 12 in parallel to form a group of pipes. The pipes 11 are preferably metal pipes, which may be circular pipes or threaded pipes. A protective layer may also be wrapped outside the pipes 11. The protective layer may be a plastic layer, for example, PVC plastics with temperature resistance up to 120°C. The equivalent diameter of the pipes may be a small diameter of 0.1 to 2 mm, preferably 0.2 to 1.0 mm, for example, 0.4 mm. If the pipe diameter is smaller, the heat exchanger is smaller in pipe thickness, better in flexibility and more convenient for folding, transportation and installation, and can realize a larger heat exchange area. The flexible substrate 12 is made of an organic material with good heat conducting performance, for example, Acrylic or other modified materials. The flexible substrate 12 has a thickness of smaller than 10 mm, for example, 3 to 6 mm, or even 1 to 2 mm. If the thickness is smaller, on one hand the heat resistance of metal pipes can be reduced; on the other hand, the heat exchanger is flexible and can be transported in rolls. Moreover, the flexible substrate is easy to adhere to the leveled contact surface and difficult to form an empty drum, so that the tactile comfort is improved. The intervals between the plurality of pipes 11 may be equal to not equal. The buried depth of the pipes 11 on the flexible substrate 12 may be uniform or not uniform, or may even be partially exposed. When only one surface of the heat exchanger is used as the heat exchange surface, the surface with a non-uniform buried depth (i.e., a smaller thickness) is used as the heat exchanger surface, so that it is helpful to reduce the heat resistance of the flexible substrate.

Two ends of the parallel pipes 11 are connected to an inlet header 13 and an outlet header 14, respectively. In order to make the heat exchange medium flow uniformly in the plurality of parallel pipes, at least one baffle plate 15 may be arranged on the inlet header 13 and the outlet header 14. The inlet header 13 and the outlet header 14 of the heat exchanger 1 are connected to a heat exchanger unit 2 placed outdoor through connecting pipes, to form a circulating heat exchange system. The heat energy the outdoor air is exchanged by the heat exchanger unit 2, then conveyed to the heat exchanger 1 by the heat exchange medium through the connecting pipe, and exchanges head with the indoor air by the heat exchanger 1, so that the indoor temperature rises. In the present application, by arranging a plurality of parallel pipes between the inlet header and the outlet header, the heat exchange medium flows into the inlet header first, then flow into the outlet header through the parallel pipes and finally flow out from the outlet header, so that the flow path of the heat exchange medium is reduced, and the energy loss and heat resistance caused by a long flow path are reduced.

As shown in FIG. 3, the heat exchanger may be arranged indoor for use as a floor heat exchanger, and the heat exchanger may have a thickness of 3 to 4 mm. Specifically, the flexible heat exchanger 1 is arranged above a floor 4. To prevent heat transfer from the heat exchanger to the floor, a heat insulating layer 6 may be arranged between the flexible heat exchanger 1 and the floor 4. For the sake of aesthetics and comfort, a decorative layer 5 may also be arranged above the flexible heat exchanger 1. The decorative layer may be a floor, or may be other cushion layers with an aesthetic function. In order to reduce the squeezing of indoor articles on the flexible heat exchanger, especially the pipes, a cushion block may be arranged between the decorative layer 5 and the heat insulating layer 6 or between the decorative layer 4 and the floor 4 to support the space occupied by the flexible heat exchanger. The inlet header 13 and the outlet header 14 may be arranged at a corner of wall or on a wall in the room, avoiding discomfort in walking and damage by trampling when they are arranged in the middle of the floor.

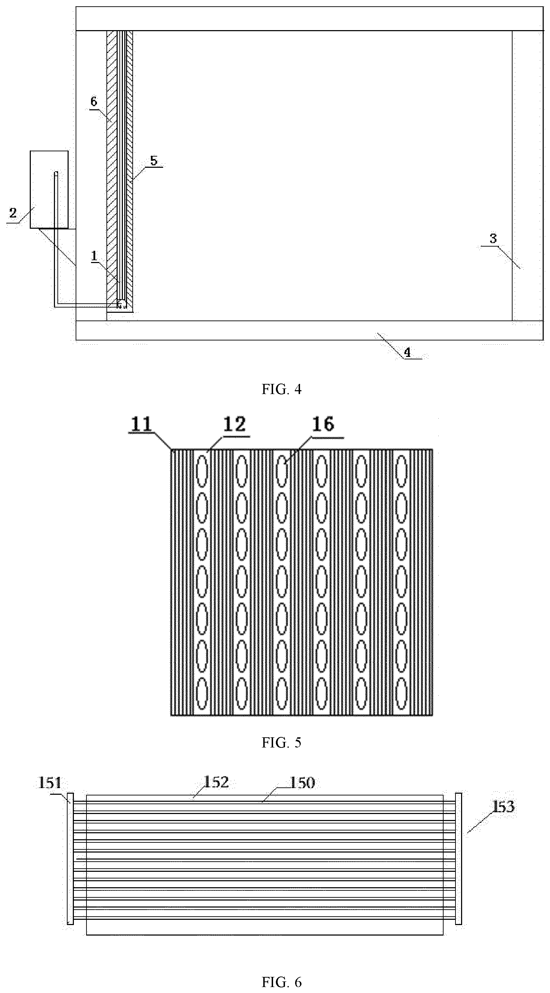

As shown in FIG. 4, the heat exchanger may also be placed in the wall or hung on the wall, and the heat exchanger may have a thickness of 1 to 2 mm. Specifically, the flexible heat exchanger 1 may be mounted on the inner wall of the room. To prevent heat transfer from the heat exchanger to the wall, a heat insulating layer 6 may be arranged between the flexible heat exchanger 1 and the wall. For the sake of aesthetics and comfort, a decorative layer 5 may also be arranged on the outer wall of the flexible heat exchanger 1. The inlet header 13 and the outlet header 14 may be arranged at a corner of wall or buried in a wall in the room. It should be recognized by those skilled in the art that the heat exchanger of the present application may also be arranged on both the floor and the wall.

As shown in FIG. 5, when it is necessary to arrange multiple groups of pipes 11, a plurality of holes 16 may be formed on the flexible substrate 12 between the multiple groups of pipes to fix the heat exchanger or allow the covering below or above the heat exchanger to pass through the holes or be squeezed out from the holes, so that the heat exchanger and the covering are formed integrally. By taking the heat exchanger being arranged on the wall as an example, the heat exchanger shown in FIG. 5 may be adhered to the wall as a whole in a grid cloth manner, and cement mortar is applied. The cement mortar passes through the holes to contact with the wall, so that the heat exchanger is firmly fixed to the wall. In this case, the heat exchanger can not only play the role of heat exchange, but also enhance the strength and firmness of the wall, thereby achieving double effects.

It is to be noted that, in addition to being applied in buildings, the "outdoor heat exchanger unit" mentioned in the present application may also be applied in other closed spaces. For example, the flexible heat exchanger may be placed in a storage box or a battery pack. When the flexible heat exchanger is placed in a storage box, the flexible heat exchanger may be adhered to the inner wall of the storage body, and the inlet header and the outlet header are connected to the outdoor heat exchanger unit, so that a heating or refrigerating environment can be formed in the storage box. When the flexible heat exchanger is placed in a battery group, the flexible heat exchanger may be wrapped outside the batteries, thereby achieving a good heat contact therebetween; and then, the inlet header and the outlet header are connected to the outdoor heat exchanger unit, so that a refrigerating environment can be formed outside the batteries.

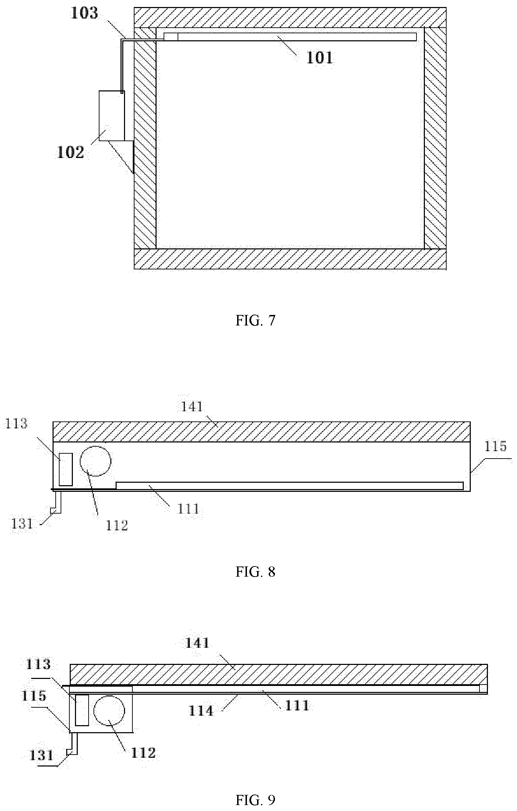

As shown in FIG. 7, the flexible heat exchanger of the present application may also be applied in a refrigerating system. The refrigerating system includes an indoor heat exchanger unit 101, an outdoor heat exchanger unit 102 and a pipe 103 connecting the indoor heat exchanger unit and the outdoor heat exchanger unit. The indoor heat exchanger unit 101 exchanges heat with the indoor air through a refrigerant, so that the temperature of the indoor air is dropped after obtaining the cold energy of the refrigerant, and the heat energy of the refrigerant is raised after obtaining the hot temperature of the indoor air. The outdoor heat exchanger unit 102 exchanges heat with the indoor air by using the refrigerant having a compressed temperature higher than the temperature of the outdoor environment, so that the temperature of the outdoor air is raised after obtaining heat energy, and the temperature of the refrigerant is dropped after obtaining cold energy. Compared with the forced convection of the indoor unit of the air conditioner, in the refrigerating system utilizing natural convection in the present application, although the heat exchange coefficient of the natural convection is less than that of the forced convection, the heat exchange area of the indoor heat exchanger utilizing natural convection is several times of that of the indoor heat exchanger of the air conditioner, so that the influenced from small heat exchange coefficient can be completely offset and the heat exchange efficiency can be eventually improved. Therefore, compared with air conditioners, the refrigerating system utilizing natural convection has obvious energy-saving advantages. As shown in FIG. 6, the heat exchanger with parallel pipes in this embodiment includes a plurality of parallel heat exchange pipes 150 having an equivalent diameter of 0.1 to 4 mm, preferably 0.2 to 2 mm, for example, 1 mm. An inlet header 151 and an outlet header 153 are provided at two ends of the plurality of parallel heat exchange pipes 150, respectively, and the heat exchanger 150 is arranged on a flexible substrate 152. The flexible heat exchanger of the present application can be transported and installed conveniently, and the specific surface area of the heat exchange pipes is increased since the diameter of the heat exchange pipes is less than that of heat exchange pipes in the normal sense, so that the heat exchange efficiency is improved.

For wet air, since different indoor temperature and humidity conditions will correspond to different dew point temperatures, a throttle valve may be provide in the circulating pipe of the heat exchange medium to control different evaporation temperatures of the heat exchange medium in the indoor heat exchanger, so that a surface temperature higher than the dew point temperature of the wet air is formed on the surface of the heat exchanger, and the formation of condensed water on the surface of the heat exchanger can thus be reduced. The temperature rise on the surface of the heat exchanger will also increase the energy efficiency ratio of the outdoor exchanger unit, but the difference between the heat exchange temperature of the indoor heat exchanger and the environmental temperature will be reduce, and the heat exchange capacity per unit time will be reduced. Therefore, it will take longer startup time to replenish the required refrigeration capacity, or the required refrigeration capacity is compensated by increasing the heat exchange area. In order to prevent the condensed water generated in the refrigerating process from dripping indoor or on the user, a condensed water receiving device needs to be provided when the surface temperature of the heat exchanger is lower than the dew point temperature of the wet air.

As shown in FIG. 8, an indoor heat exchanger 111 is arranged on a bracket 115, and the bracket 115 is mounted on a building. For example, the bracket may be mounted on a floor 141. In order to prevent the condensed water from dripping, a fan 112 may also be mounted in the bracket 115 to suck the condensed water on the surface of the indoor heat exchanger 111, so that the condensed water is evaporated and dried quickly. The water vapor sucked by the fan 112 is conveyed to a condensed water collector 113, the wet air in the condensed water collector 113 is further condensed into water, and the condensed water is discharged through a water discharge pipe 131. As shown in FIG. 9, in another implementation, a decorative layer 114 is arranged on the surface of the indoor heat exchanger 111, and the indoor heat exchanger 111, the decorative layer 114 and the floor 141 are formed integrally. In order to prevent the condensed water from dripping, a fan 112 may be provided. The fan 112 sucks the condensed water on the surface of the decorative layer 114, so that the condensed water is evaporated and dried quickly. The wet air sucked by the fan is conveyed to the condensed water collector 113 and then condensed into water in the condensed water collector 113, and the condensed water is discharged to outdoor through the water discharge pipe 131.

In order to facilitate the collection or discharge of the condensed water, the indoor heat exchanger 111 may be obliquely arranged in a direction toward the fan 112. In order to facilitate the condensation of the wet air on the heat exchanger, a plurality of through holes may be formed on the flexible substrate 152 of the indoor heat exchanger 111, and the through holes are arranged between the heat exchange pipes 150 and run through the flexible substrate 152. When the through holes have a diameter of 1 to 2 mm or less than 1 mm, a capillary phenomenon will occur. The condensed water on the indoor heat exchanger can be locked tightly without dripping due to the capillary action of the through holes, and the condensed water will be exposed to the indoor heat exchanger due to the existence of surface tension. Further, there are enough through holes on the flexible substrate 152, so that the flexible substrate becomes a sponge-like foam structure with openings. Thus, the condensed water formed on the surface of the indoor heat exchange will be sucked into the flexible substrate. The condensed water is uniformly distributed on the flexible substrate, so that the flexible substrate quickly conducts the energy on the heat exchange pipes by using the good heat conducting performance of the condensed water. Accordingly, the whole indoor heat exchanger forms a uniform temperature field, and the efficiency of heat exchange with the indoor air is improved. The fan can pump away the water adsorbed on the flexible substrate by suction, to prevent the condensed water on the indoor heat exchanger from dripping.

When the through holes on the flexible substrate 152 is greater than 2 mm, the indoor heat exchanger 111 may be adhered to the floor 141, and the material forming the decorative layer 114 (e.g., cement, clay, etc.) can enter the through holes. After the decorative layer 114 is dried and cured, the indoor heat exchanger 111 and the floor 141 are formed integrally. The outdoor heat exchanger unit 102 includes a compressor, an outdoor heat exchanger, a throttle valve, a fan, a control component, etc. An air flow generated by the fan produces forced convection between the outdoor heat exchanger and the indoor air, and the refrigerant in the indoor heat exchanger absorbs the cold energy from the outdoor air and circulates it outdoor. The control component can control the throttle valve, so that the temperature of the refrigerant after throttling expansion is slightly higher than the humidity of the indoor air, and a large amount of condensed water will not be generated. When the humidity of the indoor air is high, the fan may be started first to dehumidify the indoor air so as to reduce the condensation of water vapor on the indoor heat exchanger.

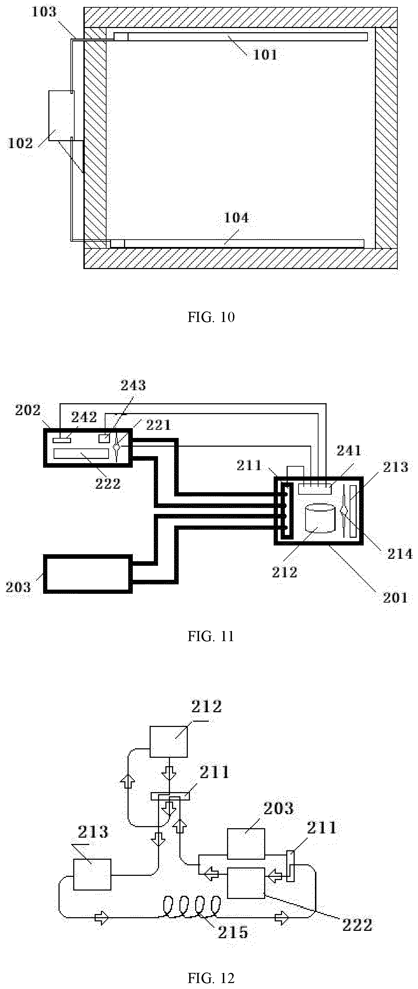

As shown in FIG. 10, the refrigerating system utilizing natural convection in the present application may also be arranged in parallel to a floor heat exchanger 104. That is, the indoor heat exchanger 101 and the floor heat exchanger are connected in parallel to the outdoor heat exchanger unit 102 through pipes 103. A control valve group is provided in the outdoor heat exchanger unit 102 to control the refrigerating system and the floor heat exchanger 104, respectively. When refrigeration is needed, the heat exchange medium discharged from the compressor of the outdoor heat exchanger unit 102 enters the outdoor heat exchanger to exchange heat with the indoor air, and the sucked cold energy is expanded by throttling and exchanges heat with the indoor air in the indoor heat exchanger. The cold energy is transferred to the indoor air, so that the indoor air is lowered in temperature and then flows into the compressor, thereby forming a cycle. When heating is needed indoor, the heat exchange medium discharged from the outdoor heat exchanger unit 102 enters the indoor floor heat exchanger to exchange heat with the indoor air, and the indoor air obtains heat to cause a temperature rise. The heat exchange medium flows into the throttle valve for throttling expansion, then exchanges heat with the outdoor air in the outdoor heat exchanger, absorbs heat and flows into the compressor, thereby forming a heat exchange cycle.

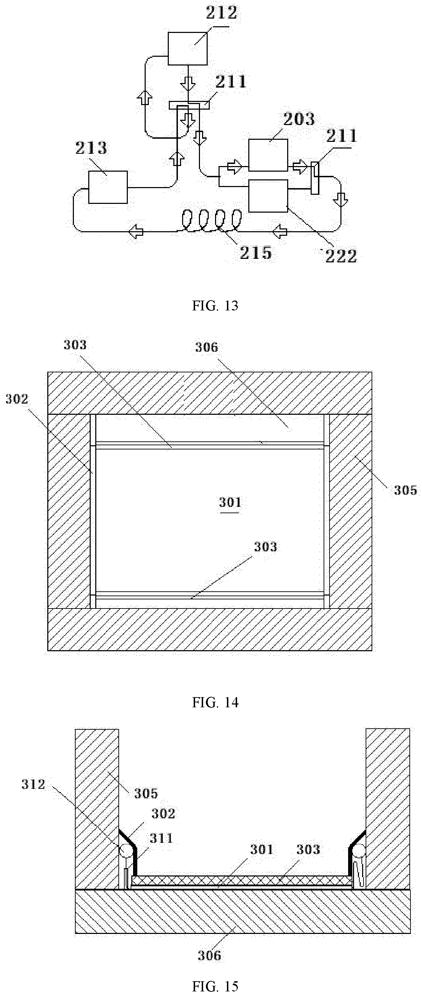

FIG. 11 shows a linkage control system of floor heating and air conditioning, including an outdoor heat exchanger unit 201, an indoor heat exchanger unit 202, a floor heat exchanger 203 and a control component. An instruction is sent by the control component to realize the linked cooperative operation of the control component with the outdoor heat exchanger unit 201, the indoor heat exchanger unit 202 and the floor heat exchanger 203. The control component includes a valve component 211 and a control panel 241. The valve component 211 is connected to the control panel 241, and the on or off of the valve is controlled by the control instruction sent by the control panel 241. The valve component 211 may be arranged in the outdoor heat exchanger unit 201, the valve component 211 controls the refrigerant circulating pipe entering or leaving the outdoor heat exchanger unit, and the control signal of the valve component 211 comes from the control panel 241 on the control component. Further, the heat exchange system of the indoor heat exchanger unit 202 is connected to the heat exchange system of the outdoor heat exchanger unit 201 through the valve component 211. The floor heat exchanger 203 is connected to the heat exchange system of the outdoor heat exchanger unit 201 through the valve component 211. The heat exchange system of the indoor heat exchanger unit 202 is connected in parallel to the floor heat exchanger 203, so that they can be controlled separately through the valve component 211 to realize refrigeration or heating indoor. It is to be noted that, the valve component 211 in FIG. 11 is only illustrative, and more than two separate valves may also be set according to actual needs, for example, referring to FIGS. 12 and 13.

Specifically, the outdoor heat exchanger unit 201 includes a compressor 212, an outdoor heat exchanger 213 and an outdoor fan 214, and the indoor heat exchanger unit 202 includes an indoor fan 221 and an indoor heat exchanger 222. The refrigerant inlet/outlet pipe of the valve component 211 is connected to the indoor heat exchanger 222 of the indoor heat exchanger unit 202, the floor heat exchanger 203 and the compressor 212 and outdoor heat exchanger 213 of the outdoor heat exchanger unit 201, respectively. The control panel 241 is further connected to a temperature sensor 242 and a signal sensor 243 arranged on the indoor heat exchanger unit 202. In addition to the control panel 241, the temperature sensor 242 and the signal sensor 243, the control component may include a plurality of control elements to control the operation of the compressor 212 on the outdoor heat exchanger unit 201, the indoor fan 221, the outdoor fan 214 or other components.

When refrigeration is needed indoor, as shown in FIG. 12, the refrigerant discharged from the compressor 212 of the outdoor heat exchanger unit exchanges heat with the outdoor air through the outdoor heat exchanger 213, throttled and expanded to the indoor heat exchanger 222 of the indoor heat exchanger unit for evaporation through the throttle valve 215, and absorbs the indoor heat to lower the indoor temperature. Then, the refrigerant flows back to the compressor 212 through the valve component 211, thereby forming a refrigerating cycle. The signal sensor 243 receives a signal and feeds the signal back to the control panel 241. The control panel 241 further acquires the signal of the temperature sensor 242, and determines a temperature threshold. When the temperature requirement is satisfied, an instruction is sent to the valve in the valve component 211 or to control the operation of the compressor 212, the outdoor fan 214 and the indoor fan 221. The signal received by the signal sensor may be a remote control signal, a key signal, a switch signal, etc. Since the valve component 211 controls the refrigerant discharged from the compressor 212 to enter the indoor heat exchanger 222 but not the floor heat exchanger 203, the floor heat exchanger 203 does not operate. Meanwhile, according to the control state of the valve component 211, the indoor fan 221 may be operated by the control panel 241.

When heating is needed indoor, as shown in FIG. 13, the refrigerant discharged from the compressor 212 of the outdoor heat exchanger unit exchanges heat with the indoor air through the floor heat exchanger 203 to raise the temperature of the indoor air, then throttled and expanded to the outdoor heat exchanger 213 of the outdoor heat exchanger unit for evaporation through the throttle valve 215, absorbs the heat in the outdoor air, and further flows into the compressor 212, thereby forming a heating cycle. The signal sensor 243 receives a signal and feeds the signal back to the control panel 241. The control panel 241 further acquires the signal of the temperature sensor 242, and determines a temperature threshold. When the requirement is satisfied, an instruction is sent to the valve component 211 to control the valve or control the operation of the compressor 212 and the outdoor fan 214. Since the valve component 211 controls the refrigerant discharged from the compressor 212 to enter the floor heat exchanger 222 but not the indoor heat exchanger 222, the indoor heat exchanger 222 does not operate. Meanwhile, according to the control state of the valve component 211, the indoor fan 221 may not be operated by the control panel 241.

In accordance with the linkage system of the present application, the linkage control of the air source heat pump and the indoor unit can be realized by connecting the pipe of the floor heat exchanger to the valve on the outdoor unit of the air conditioner on the basis of the existing indoor air conditioner unit, without additionally providing a separate outdoor unit to connect to the floor heat exchanger, so that the cost can be reduced and the overall structure is simpler. The floor heating operation, the temperature sampling control and the like are all completed by the indoor unit, so that the addition of sampling components and control components is reduced, and the cost is reduced. In a refrigerating cycle, the valve component of the present application switched off the connection between the heat exchange system of the outdoor unit and the floor heat exchanger; and, in a heating cycle, the valve component switches off the connection between the heat exchange system of the outdoor unit and the heat exchange system of the indoor unit. Thus, the convenience of control is realized, the wind noise produced by the indoor fan can be reduced, and the user experience is improved.

FIGS. 14-17 show the schematic diagrams of placing the flexible floor heat exchanger 301 of the present application in a room. The flexible floor heat exchanger 301 may be directly placed or adhered to a floor 306. The flexible floor heat exchanger 301 includes multiple rows of parallel pipes 313 and a flexible substrate 311. The parallel pipes 313 are arranged on the flexible substrate 311, headers 312 are provided two ends of the parallel pipes 313, respectively, and the parallel pipes 313 are hermetically connected to the headers 312. A heat exchange medium flows from one header, then flows in the parallel pipes in parallel and flows out from the other header.

The parallel pipes 313 may be buried or embedded into a flexible substrate 311, or may be partially exposed from the flexible substrate 311. It should be understood by those skilled in the art that, to satisfy the heat transfer requirements, a good thermal contact needs to be realized between the parallel pipes 313 and the flexible substrate 311. The headers 312 may be further connected to an outdoor heat exchanger to realize a heating cycle by circulating the refrigerant. A decorative layer 304 may also be provided on the flexible floor heat exchanger 301, so that the floor heat exchanger 301 can be protected, and the indoor floor can be more aesthetical. The decorative layer may be a flexible carpet, a thin floor, etc., in order to reduce the heat resistance caused by the floor heat exchanger. The decorative layer 304 may be placed separately from or integrally with the flexible floor heat exchanger 301. That is, the decorative layer 304 and the flexible floor heat exchanger 301 may be arranged integrally or separately.

The headers 312 of the flexible floor heat exchanger 301 are large in size, so it is inappropriate to directly bury the headers at positions where a person in the room carries out activities, and the headers may be arranged at positions close to the wall 305, respectively. Since the indoor width may be inconsistent, it is very difficult to allow the headers 312 to close to the wall 305. If the headers 312 are placed directly on the floor 306 without protection, since the headers have a large diameter, the person in the room will feel uncomfortable when walking and be easier to trip, and will also damage the flexible floor heat exchanger. Therefore, in the present application, the headers are mounted on the bottom of the wall. For example, the headers may be mounted in a baseboard 302 for protection. It should be understood by those skilled in the art that, without providing any baseboard, the headers may also be buried in the grooves on the bottom of the wall or be separately arranged in a mounting box.

Due to its very high heat exchange efficiency, the flexible floor heat exchanger of the present application needs to be placed locally, not completely, in the room. As shown in FIG. 14, the placement range of the flexible floor heat exchanger is within the range between protection strips 303. The protection strips 303 are arranged at edge positions of the flexible floor heat exchanger 301 in a direction perpendicular to the headers 312, to protect the edge positions. That is, the protection strips are arranged at edge positions of the placement range of the flexible floor heat exchanger, and the edge positions of the flexible floor heat exchanger 301 in the length direction are shown in FIG. 14. Since the flexible floor heat exchanger 301 is very thin, the protection strips 303 may be made of a metal profile, or a kinked metal plate, or plastics by extrusion molding, to form a very thin protective structure. The protection strips 303 may be fixed to the floor 306 through fasteners 307 such as screws or by an adhesive, to form the overall protection structure of the flexible floor heat exchanger, so that the person in the room will not trip or damage the flexible floor heat exchanger when walking. In the present application, the metal profile refers to an integrally prefabricated profile, and the kinked metal plate means that the metal plate is kinked to form a clamping plate structure. It should be understood by those skilled in the art that the both are different components and have the commonly understandable meanings.

As shown FIGS. 15-16, the placement length of the flexible floor heat exchanger may be greater than the length of the indoor space. By fully utilizing the flexibility of the flexible floor heat exchanger, the spare size is kinked and hidden in the baseboard 302. A plurality of connection points connected to the pipes 313 are provided on the headers of the flexible floor heat exchanger. When the refrigerant is leaked, the leakage point can be found only after the baseboard is removed for check, so that it is convenient for maintenance. In order to further protect the flexible floor heating component, protective jackets 314 may also be sheathed on the headers 312, so that the headers 312, the pipes 313 and the flexible substrate 311 form a strong entirety at the ends. The protective jackets 314 may be made of a flexible and temperature-resistant organic material, e.g., silicone rubber, and may be enhanced by screws to form a close fit structure.

Due to the high heat exchange capability of the flexible floor heat exchanger, the heat exchange requirement can be satisfied by locally placing the flexible floor heat exchanger in the room. For the occupied space, the flexible floor heat exchanger may be conveniently mounted without dismounting the fixed facilities in the room, and may also be bent according to actual needs. In the present application, the headers may be mounted on the bottom of the wall (e.g., in the baseboard) for protection, and protection strips may also be provided on side edges where the heat exchanger is placed, so that the interference to the activities of the person in the room can be avoided and the damage to the heat exchanger can also be avoided. Meanwhile, by arranging the headers in the baseboard, it is also convenient for maintenance. In the present application, protective jackets are sheathed on the headers, so that the headers, the pipes and the flexible substrate form a strong entirety at the ends. In addition, the protective jackets can also enhance connection by fasteners to form an overall assembly mechanism.

The following heat conduction formula is

$$Q = \frac{\lambda \Delta T A t}{\delta}$$

adopted: , where $\lambda$ is the coefficient of heat conductivity of the material, $\delta$ is the plate thickness, $\Delta T$ is the temperature change, $t$ is the conduction time, and $A$ is the contact area. In the case of the same $\Delta T$, $A$

and $t$, $Q$ depends on a variant $\dfrac{\lambda}{\delta}$ . If PVC is used as organic plastics, the coefficient of heat conductivity of the PVC is 0.17 W/m. K. If the calculation is performed according to the PVC thickness of 0.26 mm,

$\dfrac{\lambda}{\delta}$ =654 W/K. If the heat exchanger is buried in a concrete layer, the thickness of the concrete layer is assumed as 25 mm and the coefficient of heat conductivity of the concrete is 1.28 W/m·K, $\dfrac{\lambda}{\delta} = 51.2$ W/K at this time. It can be seen that the difference in $\dfrac{\lambda}{\delta}$ between the heat exchanger of the present application and the concrete layer is more than 10 times, the heat resistance of the concrete layer is very large. In the present application, the heat exchanger can be avoided from being buried in the concrete layer, so that the defects of larger heat resistance and slow heat conduction of the concrete layer are overcome.

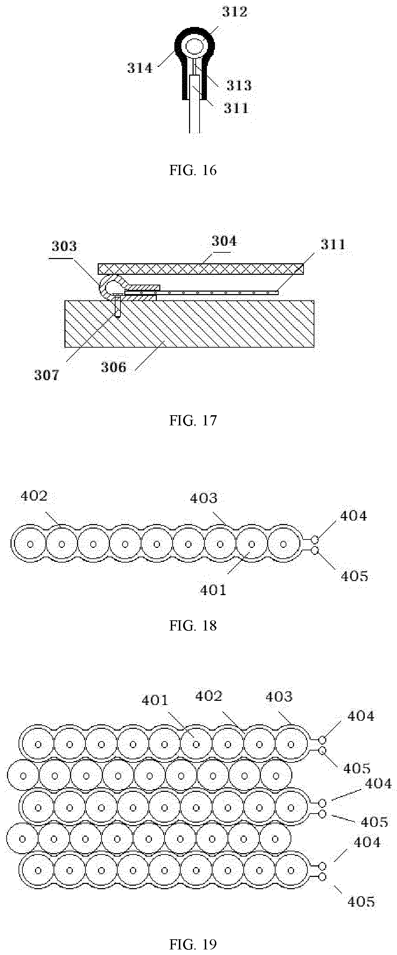

FIGS. 18-19 also show the schematic diagrams of applying the flexible heat exchanger of the present application in a battery group or a battery component. The battery component includes at least one battery group arranged in parallel. The battery group includes at least one battery 401. A flexible heat exchanger 403 is wrapped outside the battery group. The flexible heat exchanger 403 and the outside of the battery group may be adhered by a heat conducting glue 402, or the flexible heat exchanger 403 is directly wrapped outside the battery group. At this time, the heat is mainly radiated by heat conduction. In another implementation, the flexible heat exchanger 403 may also be placed on an inner wall of a battery box, and the battery component is placed in the battery box. The heat radiated by the battery group is transferred to the air inside the battery box, and the heat in the air inside the battery box is transferred out through the flexible heat exchanger.

A first header 404 and a second header 405 are connected to an external heat exchange component. By circulating the heat exchange medium the battery is cooled. When there are more than two groups of batteries, a plurality of inlet headers and a plurality of outlet headers may be connected, and then connected to a heat radiator unit outside the battery group to realize the refrigerating cycle of the heat exchange medium. As shown in FIG. 19, the first headers 404 of the multiple groups of batteries may be communicated and the second headers 405 of the multiple groups of batteries may also be communicated, and then connected to the inlet and the outlet of the heat exchanger of the external heat radiator unit, respectively. As shown in FIG. 19, each battery group arranged in parallel is one row. It should also be recognized by those skilled in the art that two rows of batteries may be used as one group. No flexible heat exchanger is arranged outside one row of batteries between two adjacent battery groups where the flexible heat exchanger is wrapped. It should also be recognized by those skilled in the art that it is also possible to provide a flexible heat exchanger outside of each group of batteries. That is, the flexible heat exchanger of the present application may be arranged at intervals or continuously. The flexible heat exchanger of the present application can be closely attached to the surfaces of the batteries, can adapt to the ups and downs of the surfaces of the batteries, can improve the heat exchange efficiency of the batteries, and can improve the service life and service safety of the batteries. The flexible heat exchanger is easy to fold and convenient for packaging, transportation and installation, can greatly improve the specific surface area of the heat exchange pipes, improve the heat exchange efficiency and reduce the usage of materials, and can reduce the manufacturing and installation cost.

Although the implementations of the present application have been described above, the contents descried are only implementations used to understand the present application and not intended to limit the present invention as defined by the appended claims.

## Claims

1. A heat exchange system, comprising a flexible heat exchanger, the flexible heat exchanger comprises a flexible substrate (12) and a plurality of pipes (11); the plurality of pipes (11) are arranged on the flexible substrate (12) in parallel; two ends of the pipes (11) are connected to an inlet header (13) and an outlet header (14), respectively; the heat exchange system further comprises an outdoor heat exchanger unit; and, the outdoor heat exchanger unit is connected to the inlet header (13) and the outlet header (14), respectively, to form a circulating heat exchange system;

   **characterized in that**

   protection strips (303) are arranged at edge positions of the flexible heat exchanger, and the protection strips are configured to be fixed on a floor (306) through fasteners or the protection strips are configured to be adhered on a floor (306).

2. The heat exchange system according to claim 1, wherein the flexible heat exchanger belongs to an indoor heat exchanger unit.

3. The heat exchange system according to claim 1 or 2, wherein the flexible heat exchanger is arranged above a floor; the inlet header (312) and the outlet header (312) are arranged on the bottom of a wall; a bent portion is formed at the end of the flexible heat exchanger; and, protective jackets (314) are sheathed outside the inlet header (312) and the outlet header (312).

4. The heat exchange system according to any preceding claim, wherein the flexible heat exchange is arranged on the wall, and a heat insulating layer (6) is arranged between the flexible heat exchanger (1) and the wall (4).

5. The heat exchange system according to any preceding claim, wherein the flexible heat exchanger comprises multiple groups of pipes (11) arranged at intervals, and holes (16) are formed on the flexible substrate (12) between the multiple groups of pipes (11).

6. The heat exchange system according to any preceding claim, wherein the flexible heat exchanger (403) is arranged in a battery component; the battery component comprises at least one battery group arranged in parallel; the battery group comprises at least one battery (401); and, the flexible heat exchanger is arranged outside the battery group.

7. The heat exchange system according to claim 6, wherein a heat conducting glue (402) is arranged between the flexible heat exchanger (403) and the outside of the battery group, or the flexible heat exchanger (403) is directly arranged outside the battery group, or the flexible heat exchanger (403) is arranged on an inner wall of a battery box of the battery component.

8. The heat exchange system according to claim 6 or 7, wherein the battery component comprises more than two battery groups, and the flexible heat exchanger (403) is arranged on the battery groups continuously or at intervals.

9. A refrigerating system utilizing natural convection, comprising the heat exchange system of claim 2, wherein the flexible heat exchanger is arranged on a ceiling or wall of a building.

10. The refrigerating system according to claim 9, further comprising a condensed water receiving device, the condensed water receiving device comprises a bracket (115) and a fan (112); the flexible heat exchanger is arranged on the bracket (115); the bracket (115) is mounted on the building; and, the fan (112) is mounted on the bracket (115).

11. The refrigerating system according to claim 9, wherein a plurality of through holes are formed on the flexible substrate (152), the through holes run through the flexible substrate (152), and the through holes have a diameter of 1 to 2 mm or less than 1 mm.

12. A combined heat exchange system, comprising a refrigerating system and a floor heat exchanger (104), wherein the refrigerating system is the refrigerating system according to claim 9, and the floor heat exchanger (104) and the indoor heat exchanger unit (101) are connected in parallel to the outdoor heat exchanger unit (102).

13. The combined heat exchange system according to claim 12, further comprising a valve component (211), wherein the heat exchange system of the indoor heat exchanger unit (202) is connected to the heat exchange system of the outdoor heat exchanger unit (201) through the valve component (211); the floor heat exchanger (203) is connected to the heat exchange system of the outdoor heat exchanger unit (201) through the valve component (211); the heat exchange system of the indoor heat exchanger unit (202) and the floor heat exchanger (203) are connected in parallel to the heat exchange system of the outdoor heat exchanger unit (201); and, refrigerant inlet and outlet pipes of the valve component (211) are connected to the heat exchanger of the indoor heat exchanger unit (202), the floor heat exchanger (203) and the compressor (212) and outdoor heat exchanger (213) in the outdoor heat exchanger unit (201), respectively.

14. The combined heat exchange system according to claim 13, wherein, in a refrigerating cycle, the valve component (211) switches off the connection between the heat exchange system of the outdoor heat exchanger unit (201) and the floor heat exchanger (203); and, in a heating cycle, the valve component (211) switches off the connection between the heat exchange system of the outdoor heat exchanger unit (201) and the heat exchange system of the indoor heat exchanger unit (202).

**Patentansprüche**

1. Wärmetauschersystem, umfassend einen flexiblen Wärmetauscher, wobei der flexible Wärmetauscher ein flexibles Substrat (12) und eine Vielzahl von Rohren (11) umfasst; wobei die Vielzahl von Rohren (11) auf dem flexiblen Substrat (12) parallel angeordnet ist; wobei zwei Enden der Rohre (11) jeweils mit einem Einlasskopf (13) und einem Auslasskopf (14) verbunden sind; wobei das Wärmetauschersystem ferner eine Außenwärmetauschereinheit umfasst; und wobei die Außenwärmetauschereinheit jeweils mit dem Einlasskopf (13) und dem Auslasskopf (14) verbunden ist, um ein Kreislaufwärmetauschersystem auszubilden;
**dadurch gekennzeichnet, dass**

Schutzstreifen (303) an Randpositionen des flexiblen Wärmetauschers angeordnet sind, und die Schutzstreifen konfiguriert sind, um auf einem Boden (306) durch Befestigungselemente befestigt zu werden, oder die Schutzstreifen konfiguriert sind, um auf einen Boden (306) geklebt zu werden.

2. Wärmetauschersystem gemäß Anspruch 1, wobei der flexible Wärmetauscher zu einer Innenwärmetauschereinheit gehört.

3. Wärmetauschersystem gemäß Anspruch 1 oder 2, wobei der flexible Wärmetauscher über einem Boden angeordnet ist; wobei der Einlasskopf (312) und der Auslasskopf (312) am Boden einer Wand angeordnet sind; wobei ein gebogener Abschnitt am Ende des flexiblen Wärmetauschers ausgebildet ist; und Schutzmäntel (314) außerhalb des Einlasskopfs (312) und des Auslasskopfs (312) ummantelt sind.

4. Wärmetauschersystem gemäß einem der vorhergehenden Ansprüche, wobei der flexible Wärmetauscher auf der Wand angeordnet ist und eine Wärmedämmschicht (6) zwischen dem flexiblen Wärmetauscher (1) und der Wand (4) angeordnet ist.

5. Wärmetauschersystem gemäß einem der vorhergehenden Ansprüche, wobei der flexible Wärmetauscher mehrere Gruppen von Rohren (11) umfasst, die in Intervallen angeordnet sind, und Löcher (16) auf dem flexiblen Substrat (12) zwischen den mehreren Gruppen von Rohren (11) ausgebildet sind.

6. Wärmetauschersystem gemäß einem der vorhergehenden Ansprüche, wobei der flexible Wärmetauscher (403) in einer Batteriekomponente angeordnet ist; wobei die Batteriekomponente zumindest eine Batteriegruppe umfasst, die parallel angeordnet ist; wobei die Batteriegruppe zumindest eine Batterie (401) umfasst; und wobei der flexible Wärmetauscher außerhalb der Batteriegruppe angeordnet ist.

7. Wärmetauschersystem gemäß Anspruch 6, wobei ein wärmeleitender Klebstoff (402) zwischen dem flexiblen Wärmetauscher (403) und der Außenseite der Batteriegruppe angeordnet ist, oder wobei der flexible Wärmetauscher (403) direkt außerhalb der Batteriegruppe angeordnet ist, oder wobei der flexible Wärmetauscher (403) an einer Innenwand eines Batteriekastens der Batteriekomponente angeordnet ist.

8. Wärmetauschersystem gemäß Anspruch 6 oder 7, wobei die Batteriekomponente mehr als zwei Batteriegruppen umfasst und der flexible Wärmetauscher (403) kontinuierlich oder in Intervallen auf den Batteriegruppen angeordnet ist.

9. Kühlsystem, das natürliche Konvektion nutzt, umfassend das Wärmetauschersystem nach Anspruch 2, wobei der flexible Wärmetauscher an einer Decke oder Wand eines Gebäudes angeordnet ist.

10. Kühlsystem gemäß Anspruch 9, ferner umfassend eine Kondenswasseraufnahmevorrichtung, wobei die Kondenswasseraufnahmevorrichtung eine Halterung (115) und einen Lüfter (112) umfasst; wobei der flexible Wärmetauscher an der Halterung (115) angeordnet ist; wobei die Halterung (115) an dem Gebäude montiert ist; und wobei der Lüfter (112) an der Halterung (115) montiert ist.

11. Kühlsystem gemäß Anspruch 9, wobei eine Vielzahl von Durchgangslöchern auf dem flexiblen Substrat (152) ausgebildet ist, wobei die Durchgangslöcher durch das flexible Substrat (152) verlaufen und die Durchgangslöcher einen Durchmesser von 1 bis 2 mm oder weniger als 1 mm aufweisen.

12. Kombiniertes Wärmetauschersystem, umfassend ein Kühlsystem und einen Bodenwärmetauscher (104), wobei das Kühlsystem das Kühlsystem gemäß Anspruch 9 ist und der Bodenwärmetauscher (104) und die Innenwärmetauschereinheit (101) parallel mit der Außenwärmetauschereinheit (102) verbunden sind.

13. Kombiniertes Wärmetauschersystem gemäß Anspruch 12, ferner umfassend eine Ventilkomponente (211), wobei das Wärmetauschersystem der Innenwärmetauschereinheit (202) über die Ventilkomponente (211) mit dem Wärmetauschersystem der Außenwärmetauschereinheit (201) verbunden ist; wobei der Bodenwärmetauscher (203) über die Ventilkomponente (211) mit dem Wärmetauschersystem der Außenwärmetauschereinheit (201) verbunden ist; wobei das Wärmetauschersystem der Innenwärmetauschereinheit (202) und der Bodenwärmetauscher (203) parallel mit dem Wärmetauschersystem der Außenwärmetauschereinheit (201) verbunden sind; und wobei Kältemitteleinlass- und -auslassrohre der Ventilkomponente (211) jeweils mit dem Wärmetauscher der Innenwärmetauschereinheit (202), dem Bodenwärmetauscher (203) und dem Verdichter (212) und dem Außenwärmetauscher (213) in der Außenwärmetauschereinheit (201) verbunden sind.

14. Kombiniertes Wärmetauschersystem gemäß Anspruch 13, wobei in einem Kühlkreislauf die Ventilkomponente (211) die Verbindung zwischen dem Wärmetauschersystem der Außenwärmetauschereinheit (201) und dem Bodenwärmetauscher (203) abschaltet; und in einem Heizkreislauf die Ventilkomponente (211) die Verbindung zwischen dem Wärmetauschersystem der Außenwärmetauschereinheit (201) und dem Wärmetauschersystem der Innenwärmetauschereinheit (202) abschaltet.

## Revendications

1. Système d'échange de chaleur, comprenant un échangeur de chaleur flexible, l'échangeur de chaleur flexible comprend un substrat flexible (12) et une pluralité de tuyaux (11) ; la pluralité de tuyaux (11) sont agencés sur le substrat flexible (12) en parallèle ; deux extrémités des tuyaux (11) sont raccordées respectivement à un collecteur d'entrée (13) et un collecteur de sortie (14) ; le système d'échange de chaleur comprend en outre une unité d'échangeur de chaleur extérieure ; et l'unité d'échangeur de chaleur extérieure est raccordée respectivement au collecteur d'entrée (13) et au collecteur de sortie (14) pour former un système d'échange de chaleur à circulation ;
**caractérisé en ce que**

des bandes de protection (303) sont agencées au niveau des positions de bord de l'échangeur de chaleur flexible, et
les bandes de protection sont conçues pour être fixées sur un sol (306) au moyen d'éléments de fixation ou les bandes de protection sont conçues pour être collées sur un sol (306).

2. Système d'échange de chaleur selon la revendication 1, ledit échangeur de chaleur flexible appartenant à une unité d'échangeur de chaleur intérieure.

3. Système d'échange de chaleur selon la revendication 1 ou 2, ledit échangeur de chaleur flexible étant agencé au-dessus d'un sol ; ledit collecteur d'entrée (312) et ledit collecteur de sortie (312) étant agencés sur le fond d'une paroi ; une partie courbée étant formée au niveau de l'extrémité de l'échangeur de chaleur flexible ; et des enveloppes de protection (314) gainant l'extérieur du collecteur d'entrée (312) et du collecteur de sortie (312).

4. Système d'échange de chaleur selon une quelconque revendication précédente, ledit échangeur de chaleur flexible étant agencé sur la paroi, et une couche d'isolation thermique (6) étant agencée entre l'échangeur de chaleur flexible (1) et la paroi (4).

5. Système d'échange de chaleur selon une quelconque revendication précédente, ledit échangeur de chaleur flexible comprenant de multiples groupes de tuyaux (11) agencés à intervalles, et des trous (16) étant formés sur le substrat flexible (12) entre les multiples groupes de tuyaux (11).

6. Système d'échange de chaleur selon une quelconque revendication précédente, ledit échangeur de chaleur flexible (403) étant agencé dans un composant batterie ; ledit composant batterie comprenant au moins un groupe de batteries agencé en parallèle ; ledit groupe de batteries comprenant au moins une batterie (401) ; et ledit échangeur de chaleur flexible étant agencé à l'extérieur du groupe de batteries.

7. Système d'échange de chaleur selon la revendication 6, une colle conductrice de chaleur (402) étant agencée entre l'échangeur de chaleur flexible (403) et l'extérieur du groupe de batteries, ou ledit échangeur de chaleur flexible (403) étant directement agencé à l'extérieur du groupe de batteries, ou ledit échangeur de chaleur flexible (403) étant agencé sur une paroi interne d'un boîtier de batterie du composant batterie.

8. Système d'échange de chaleur selon la revendication 6 ou 7, ledit composant batterie comprenant plus de deux groupes de batteries, et ledit échangeur de chaleur flexible (403) étant agencé sur les groupes de batteries de manière continue ou à intervalles.

9. Système de réfrigération utilisant la convection naturelle, comprenant le système d'échange de chaleur de la revendication 2, ledit échangeur de chaleur flexible étant agencé sur un plafond ou une paroi d'un bâtiment.

10. Système de réfrigération selon la revendication 9, comprenant en outre un dispositif de réception d'eau condensée, le dispositif de réception d'eau condensée comprend un support (115) et un ventilateur (112) ; l'échangeur de chaleur flexible est agencé sur le support (115) ; le support (115) est monté sur le bâtiment ; et le ventilateur (112) est monté sur le support (115).

11. Système de réfrigération selon la revendication 9, une pluralité de trous traversants étant formés sur le substrat flexible (152), lesdits trous traversants traversant le substrat flexible (152), et lesdits trous traversants possédant un diamètre de 1 à 2 mm ou inférieur à 1 mm.

12. Système d'échange de chaleur combiné, comprenant un système de réfrigération et un échangeur de chaleur au sol (104), ledit système de réfrigération étant le système de réfrigération selon la revendication 9, et ledit échangeur de chaleur au sol (104) et ladite unité d'échangeur de chaleur intérieure (101) étant raccordés en parallèle à l'unité d'échangeur de chaleur extérieure (102).

13. Système d'échange de chaleur combiné selon la revendication 12, comprenant en outre un composant soupape (211), ledit système d'échange de chaleur de l'unité d'échangeur de chaleur intérieure (202) étant raccordé au système d'échange de chaleur de l'unité d'échangeur de chaleur extérieure (201) par l'intermédiaire du composant soupape (211) ; ledit échangeur de chaleur au sol (203) étant raccordé au système d'échange de chaleur de l'unité d'échangeur de chaleur extérieure (201) par l'intermédiaire du composant soupape (211) ; ledit système d'échange de chaleur de l'unité d'échangeur de chaleur intérieure (202) et ledit échangeur de chaleur au sol (203) étant raccordés en parallèle au système d'échange de chaleur de l'unité d'échangeur de chaleur extérieure (201) ; et, lesdits tuyaux d'entrée et de sortie de fluide frigorigène du composant soupape (211) étant raccordés respectivement à l'échangeur de chaleur de l'unité d'échangeur de chaleur intérieure (202), à l'échangeur de chaleur au sol (203) et au compresseur (212) et à l'échangeur de chaleur extérieure (213) dans l'unité d'échangeur de chaleur extérieure (201).

14. Système d'échange de chaleur combiné selon la revendication 13, dans un cycle de réfrigération, ledit composant soupape (211) coupant le raccordement entre le système d'échange de chaleur de l'unité d'échangeur de chaleur extérieure (201) et l'échangeur de chaleur au sol (203) ; et, dans un cycle de chauffage, ledit composant soupape (211) coupant le raccordement entre le système d'échange de chaleur de l'unité d'échangeur de chaleur extérieure (201) et le système d'échange de chaleur de l'unité d'échangeur de chaleur intérieure (202).

FIG. 1

FIG. 2

FIG. 3

FIG. 4

FIG. 5

FIG. 6

103

101

102

FIG. 7

141

113

115

131          112          111

FIG. 8

141

113

115

114          111

131          112

FIG. 9

FIG. 10

FIG. 11

FIG. 12

FIG. 13

FIG. 14

FIG. 15

FIG. 16

FIG. 17

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090025921 A1